# EUROPEAN PATENT APPLICATION

(11) **EP 4 808 275 A1**
(43) Date of publication of application: **16.09.2026**
(21) Application number: 23958262.0
(22) Date of filing: 08.11.2023
(51) Int. Cl.: H04W 88/02, H04W 16/28, H04W 72/232

(54) **TERMINAL, WIRELESS COMMUNICATION METHOD, AND BASE STATION**

(71) Applicant: NTT DOCOMO, INC., Tokyo 100-6150 (JP)
(72) Inventor: YOSHIOKA, Shohei, Tokyo 100-6150 (JP); SHICHIJO, Taichi, Tokyo 100-6150 (JP); SHIBAIKE, Naoya, Tokyo 100-6150 (JP); MATSUMURA, Yuki, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2023/040214
(87) International publication number: WO 2025/099860

(57) **Abstract**

A terminal according to one aspect of the present disclosure includes a receiving section that receives at least one of a first indication used for at least a beam indication and a second indication used for a beam indication and scheduling of a specific channel, the first indication and the second indication being common to a plurality of operators, and a control section that determines a beam to be applied to the specific channel, based on reception timing of the first indication and reception timing of the second indication. According to one aspect of the present disclosure, it is possible to appropriately apply a beam in a shared resource.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For a future radio communication system, it is studied that a plurality of operators share sites/resources and the like for the purpose of increasing the efficiency of use of frequency bands (existing frequency bands and new high frequency bands).

However, how to apply beams to receive signals when a plurality of operators share resources has not been sufficiently studied. Unless such a study is sufficient, each operator cannot perform operation of flexible communication by each operator, which may cause suppression of improvement in communication quality.

Thus, an object of the present disclosure is to provide a terminal, a radio communication method, and a base station that appropriately apply a beam in a shared resource.

### Solution to Problem

A terminal according to one aspect of the present disclosure includes a receiving section that receives at least one of a first indication used for at least a beam indication and a second indication used for a beam indication and scheduling of a specific channel, the first indication and the second indication being common to a plurality of operators, and a control section that determines a beam to be applied to the specific channel, based on reception timing of the first indication and reception timing of the second indication.

### Advantageous Effects of Invention

According to one aspect of the present disclosure, it is possible to appropriately apply a beam in a shared resource.

### Brief Description of Drawings

[FIG. 1] FIG. 1A to FIG. 1D are diagrams to show examples of a scenario of sharing.
[FIG. 2] FIG. 2A to FIG. 2C are diagrams to show examples of shared resources.
[FIG. 3] FIG. 3 is a diagram to show an example of a beam indication according to Embodiment 1a.
[FIG. 4] FIG. 4 is a diagram to show an example of a beam indication according to Embodiment 1b.
[FIG. 5] FIG. 5 is a diagram to show an example of a beam indication according to Embodiment 2a.
[FIG. 6] FIG. 6 is a diagram to show an example of a beam indication according to Embodiment 2b.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.
[FIG. 11] FIG. 11 is a diagram to show an example of a vehicle according to one embodiment.

### Description of Embodiments

### (Sharing among Multiple MNOs)

For 6G, several requirements below are under study.
- Ultra wideband communication.
- Mission critical communication.
- Ultra massive connection.
- Universal coverage.
- Intelligent connection.
- Ubiquitous sensing.
- New use case.

In addition to the above goals, several new concepts can be set as goals.
- Extensible (for example, ensuring more prospects).
- Customizable (for example, facilitating operation).
- Sustainable (for example, reducing cost, increasing robustness).

For reduction of deployment costs of base stations, the following factors of sharing among mobile network operators (MNOs) may be studied for operation in a licensed spectrum.

- Existing sharing from LTE (equipment sharing). Core network sharing (gateway core network, GWCN, multi-operator core network, MOCN). Different operators share a cell to thereby be able to assign different PLMN IDs to different operators.
- RAN sharing (multi-operator RAN, MORAN). Different operators share base station hardware to thereby be able to assign different cells to different operators.
- Site sharing. Different operators share a site to thereby be able to assign different base stations to different operators.
- Spectrum Sharing.

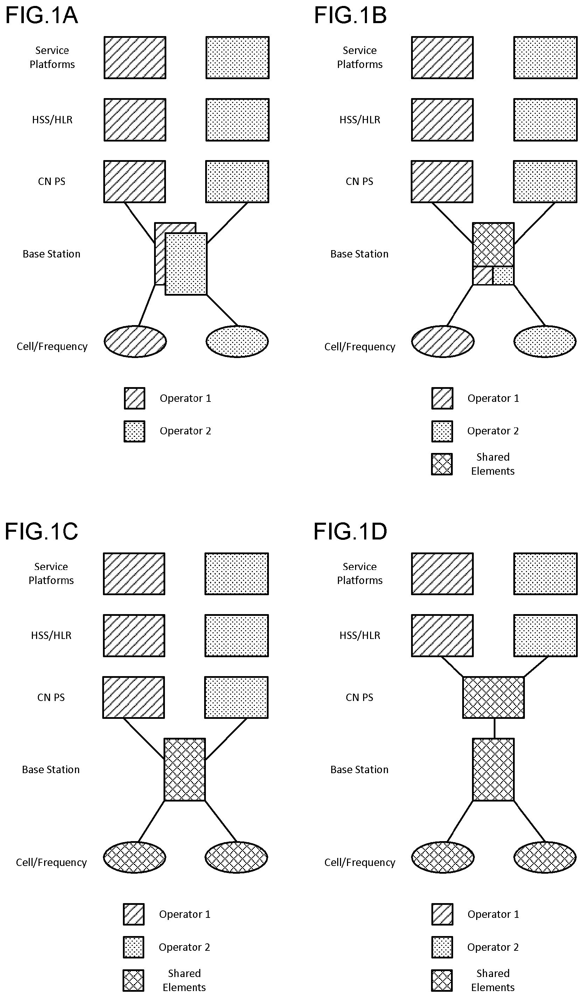

FIG. 1A to FIG. 1D are diagrams to show examples of a scenario of sharing.

FIG. 1A shows an example of site sharing. As shown in FIG. 1A, in the site sharing, an antenna site is shared by a plurality of operators. Meanwhile, service platforms, an HSS (Home Subscriber Server)/HLR (Home Location Register), core network (CN) packet switching (PS), a base station, and a cell/frequency are independent for each of a plurality of service providers.

FIG. 1B shows an example of a MORAN (Multi Operator RAN). As shown in FIG. 1B, in MORAN, a plurality of operators share a part of a base station (for example, the hardware of the base station) in addition to antenna sites. Meanwhile, a service platform, an HSS/HLR, CN PS, the other part of the base station (for example, the software of the base station), and a cell/frequency are independent for each of a plurality of operators.

FIG. 1C shows an example of an MOCN (Multi Operator Core Network). As shown in FIG. 1C, in MOCN, multiple operators share a base station and a cell/frequency. Meanwhile, a service platform, an HSS/HLR, and CN PS are independent for each of a plurality of operators.

FIG. 1D shows an example of a GWCN (Gateway Core Network). As shown in FIG. 1D, in GWCN, a plurality of operators share CN PS, a base station, and a cell/frequency. Meanwhile, a service platform and an HSS/HLR are independent for each of the plurality of operators.

For example, in MOCN/GWCN, since a cell is shared by a plurality of operators, it is desirable that a configuration can be changed for each operator (for example, for each ID related to a public land mobile network (PLMN) (PLMN ID)).

### (Analysis)

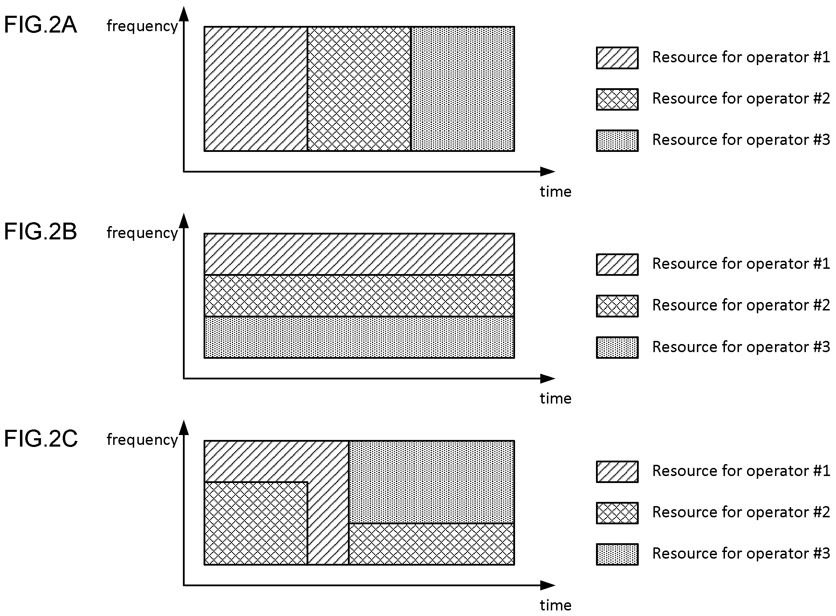

As described above, it is not studied sufficiently how to share a base station apparatus/resource when the base station apparatus/resource is shared among a plurality of operators. For example, as a shared frequency resource, a case where resources for the respective operators are time division multiplexed (TDMed) (see FIG. 2A), a case where resources for the respective operators are frequency division multiplexed (FDMed) (see FIG. 2B), and a case where resources for the respective operator are TDMed and FDMed (which may be referred to as flexible TDM/FDM, see FIG. 2C) are conceivable.

However, when control is performed such that time/frequency resources are orthogonal for each operator in the shared frequency resource, there is a concern that frequency use efficiency and energy saving efficiency on the network side are reduced.

When analog beam forming is used, it is necessary to consider constraints from a scheduling perspective, and therefore there is possibility that communication cannot be performed as scheduled between a plurality of operators. More specifically, when analog beam forming is used and a common radio frequency (RF) apparatus is used for frequency resources (for example, resources for which frequency division multiplexing is used) on the base station side, there may be many cases where only one beam can be used at the same timing, and there is possibility that scheduling using different beams may collide.

However, sufficient study is not conducted on a method of using a shared resource assuming such a case.

In this way, unless a signal/resource common to the plurality of operators is sufficiently studied, the shared resource cannot be appropriately used, which may suppress improvement of communication quality.

Thus, the inventors of the present invention came up with the idea of a method of using a shared resource in order to efficiently perform station deployment/frequency utilization by resource sharing.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a_{b}, a_b, and a notation in which b is attached to the lower right of a may be interchangeably interpreted. In the present disclosure, a^{c}, a^c, and a notation in which c is attached to the upper right of a may be interchangeably interpreted. In the present disclosure, a_{b}^{c}, a_b^c, and a notation in which b is attached to the lower right of a and c is attached to the upper right of a may be interchangeably interpreted. In the present disclosure, ceil(x), the ceiling function, and ceiling may be interchangeably interpreted. In the present disclosure, floor(x), the floor function, and floor may be interchangeably interpreted. In the present disclosure, sqrt(x) and a square root (root) may be interchangeably interpreted. In the present disclosure, x^{~} may be expressed by attaching ^{~} over x or may be referred to as x-tilde. In the present disclosure, x⁻ may be expressed by attaching - over x or may be referred to as x-bar.

In the present disclosure, an MNO, an operator, a service provider, a PLMN, an operator policy, a configuration for each service provider, a configuration for each operator, and the like may be interchangeably interpreted. In the present disclosure, an MNO, a network (NW), a base station, a central unit (CU), a distributed unit (DU), a radio unit (RU), and a TRP may be interchangeably interpreted.

In the present disclosure, a specific ID, a PLMN ID, an ID related to a PLMN, an ID related to an operator, a PLMN, one or more pieces of information identified by a PLMN, a PLMN set, an ID/information/parameter used to identify an operator/MNO/service provider, and the like may be interchangeably interpreted.

In the present disclosure, system information (SI), a part of system information, partial system information, an MIB, an SIB, an SIB used for initial access, SIB1, SIB X (x is any number), a downlink shared channel carrying system information, and a PDSCH carrying system information may be interchangeably interpreted.

### (Radio Communication Method)

Hereinafter, in the present disclosure, a cell in which frequency resource sharing is performed between a plurality of operators is referred to as "cell x" for convenience, but this does not indicate a unique name of the cell.

A terminal (which may be referred to as a user terminal or user equipment (UE)) may perform a cell-x-specific operation related to a beam in the cell x.

Hereinafter, each embodiment of the present disclosure may be applied based on the assumption that the UE attempts to connect to a given operator (cell corresponding thereto)/PLMN. In the present disclosure, the operator/PLMN is referred to as "PLMN #A" for convenience.

In the present disclosure, "common to (a plurality of) operators" may mean that the operators are not distinguished, or may mean that use by the UE is possible regardless of operator.

In the present disclosure, "at (the time of)" and "after" may be interchangeably interpreted.

A received DL channel/signal may include a reference signal (for example, a DMRS/CSI-RS/TRS/PTRS).

A DL channel/signal in the present disclosure may be interpreted as any DL channel/signal (for example, a PDCCH/PDSCH), and a UL channel/signal in the present disclosure may be interpreted as any UL channel/signal (for example, a PUCCH/PUSCH).

In the present disclosure, a (plurality of) UE common signal(s) may mean a signal common to a plurality of UEs or a signal based on a common resource configuration. In the present disclosure, a (plurality of) UE common signal(s) may be based on whether the UE common signal(s) is common to service providers or may be unrelated to whether the UE common signal(s) is common to service providers.

In the present disclosure, the description of PLMN-common/PLMN-dedicated/UE-common/UE-dedicated may mean PLMN-common/PLMN-dedicated/UE-common/UE-dedicated configurations/resources/signals, respectively.

In the present disclosure, a PLMN-common configuration/resource/signal may mean a configuration/resource/signal not depending on PLMN ID (not associated with any PLMN ID) or may mean a configuration/resource/signal associated with a plurality of PLMN IDs.

In the present disclosure, a PLMN-common configuration/resource/signal may mean a configuration/resource/signal associated with one PLMN ID.

In the present disclosure, a beam, a specific parameter related to a beam, an antenna port, a codebook, a Transmission Configuration Indication state (TCI state), Quasi-Co-Location (QCL), QCL assumption, a reference signal, a panel, an antenna panel, a spatial domain transmission filter, a spatial domain reception filter, precoding, a precoder, a weight (precoding weight), spatial relation, a spatial domain filter, transmission power, phase rotation, a layer, the number of layers, a rank, a resource, a resource set, a beam width, a beam angle, an antenna, an antenna element, a UE panel, a transmission entity, and a reception entity may be interchangeably interpreted.

In the present disclosure, a resource, a time (domain) resource, a frequency (domain) resource, a time/frequency resource, and a resource of any domain may be interchangeably interpreted.

In the present disclosure, a signal, a channel, a reference signal, information, an information element, a parameter, and a field may be interchangeably interpreted.

In the present disclosure, drop, stop, cancel, puncture, rate match, postpone, not transmit, not receive, ignore, and the like may be interchangeably interpreted.

### <First Embodiment>

A first embodiment relates to a configuration/indication/notification related to a beam for a certain resource.

The UE may determine/decide a beam to be applied to transmission and/or reception of a signal in a certain time resource, based on a first configuration/indication/notification related to a beam.

The first configuration/indication/notification may be transmitted by using a signal common to PLMNs (common to a plurality of operators).

### <<Embodiment 1a>>

The UE may receive a configuration related to a signal common to the PLMNs.

The UE may receive the first configuration/indication/notification, based on a configuration related to the signal common to the PLMNs.

The configuration related to the signal common to the PLMNs may be transmitted by using, for example, system information (for example, at least one of an SIB (for example, SIB1) scheduled by a master information block and another SIB (for example, SIB x)).

The first configuration/indication/notification may indicate, for example, information related to a beam for each specific time domain resource.

The first configuration/indication/notification may be transmitted, for example, by using at least one of higher layer signaling (for example, RRC/MAC CE) and DCI/PDCCH.

The DCI used for the first configuration/indication/notification may have, for example, the same DCI size as that of another DCI (for example, at least one of DCI (DL assignment) for scheduling a PDSCH and DCI (UL grant) for scheduling a PUSCH).

CRC of the DCI used for the first configuration/indication/notification may be scrambled using, for example, an existing RNTI, or may be scrambled using a newly defined/configured RNTI.

UE capability for reception/monitoring related to the first configuration/indication/notification may be defined. When the UE does not support the capability, the UE may not be allowed to connect to the cell x. It may be defined that the UE connected to the cell x needs to support the capability.

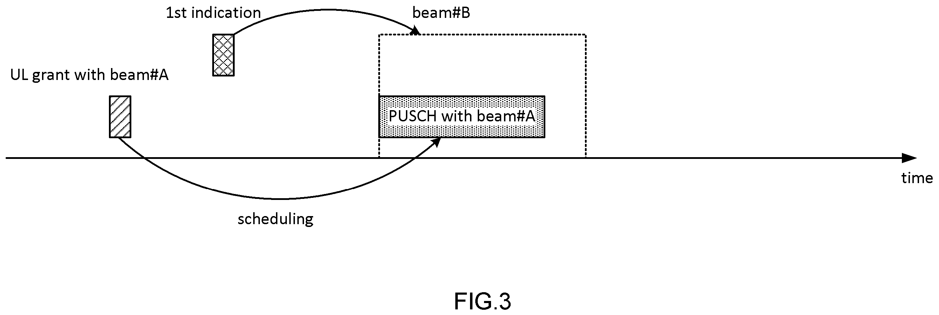

FIG. 3 is a diagram to show an example of a beam indication according to Embodiment 1a. In the example shown in FIG. 3, the UE is scheduled with a PUSCH using a beam #A by DCI (UL grant) using the beam #A.

In the example shown in FIG. 3, the UE receives the first indication (indicating a beam #B) in a certain time resource after receiving the DCI. The time resource includes a transmission period of the PUSCH.

In Embodiment 1b (and Embodiment 1b'), a method of applying/deciding a beam in such a case will be described below.

### <<Embodiment 1b>>

The UE may determine/decide information (which may be referred to as beam indication information) related to a beam to be applied to a DL channel (for example, PDSCH)/UL channel (for example, PUSCH) scheduled by DCI, by using the DCI.

In other words, beam indication information to be applied to a DL channel (for example, PDSCH)/UL channel (for example, PUSCH) scheduled by DCI may be included in the DCI.

The beam indication information may be, for example, a UE-dedicated signal.

The UE may receive the beam indication information and the first configuration/indication/notification described in above-described Embodiment 1a.

The UE may determine/decide a beam to be applied to a scheduled channel/signal, based on at least one of reception timing of the beam indication information and reception timing of the first configuration/indication/notification that is a signal common to the PLMNs.

The UE may receive the beam indication information before receiving the first configuration/indication/notification, or may receive the beam indication information after receiving the first configuration/indication/notification.

When a beam based on the beam indication information included in DCI already received is different from a beam indicated by the first indication received after the reception of the beam indication information, the UE may determine not to transmit/receive a DL channel/UL channel scheduled by the DCI in the indicated resource (for example, cancel/drop the transmission/reception of the DL channel/UL channel).

In this case, the UE may determine to transmit/receive the DL channel/UL channel in another time resource.

Such another time resource may be a next time resource corresponding to the beam indication information.

When the UE does not receive the scheduled DL channel, the UE may transmit a negative acknowledgment (NACK) to the NW or may not generate HARQ-ACK information/bit (operation 1b).

The UE may determine the application of operation 1b, based on a period between a HARQ feedback for the DL channel and (transmission/reception of) the first indication.

For example, the UE may apply operation 1b when the period between the HARQ feedback for the DL channel and (transmission/reception of) the first indication is equal to or longer than (or longer than) a specific time period T.

For example, the UE may not apply operation 1b when the period between the HARQ feedback for the DL channel and (transmission/reception of) the first indication is equal to or shorter than (or shorter than) the specific time period T.

The T may be defined in a specification in advance, may be configured/indicated/provided by notification to the UE by using higher layer signaling (RRC/MAC CE)/DCI, may be decided based on the UE capability information, or may be decided by using a combination of these.

The DL channel may be transmitted/received earlier in time than the first indication, or may be transmitted/received later in time than the first indication. The first indication may be an indication of a beam related to a certain time resource in the future/past from the time of reception/transmission of the first indication.

The UE may determine to stop/drop the transmission of the UL channel, based on a period between the transmission of the UL channel and (the transmission/reception of) the first indication.

For example, the UE may determine to stop/drop the transmission of the UL channel when the period between the transmission of the UL channel and (the transmission/reception of) the first indication is equal to or longer than (or longer than) a specific time period T'.

For example, the UE may determine not to stop/drop the transmission of the UL channel when the period between the transmission of the UL channel and (the transmission/reception of) the first indication is equal to or shorter than (or shorter than) the specific time period T'.

The T' may be defined in a specification in advance, may be configured/indicated/provided by notification to the UE by using higher layer signaling (RRC/MAC CE)/DCI, may be decided based on the UE capability information, or may be decided by using a combination of these.

The UE may assume/determine that the above-described T and T' are the same, or may assume/determine that these are determined/defined separately.

Note that, when some resources of the DL channel/UL channel scheduled by the DCI are included in the time resource corresponding to the first indication, the present embodiment may be applied to the some resources, or the present embodiment may be applied to all resources of the DL channel/UL channel including the some resources.

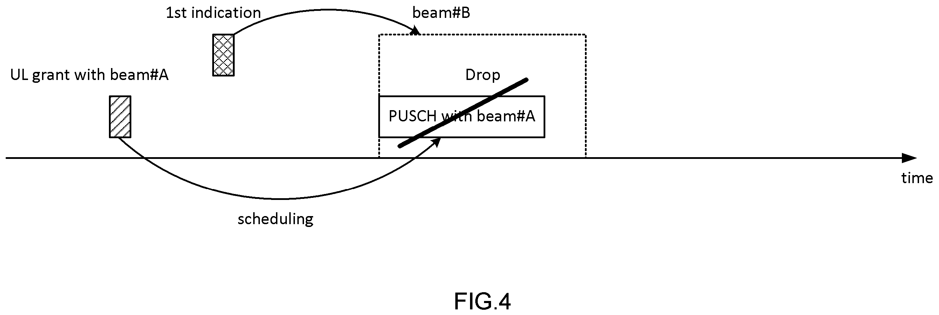

FIG. 4 is a diagram to show an example of a beam indication according to Embodiment 1b. In the example shown in FIG. 4, the UE is scheduled with a PUSCH using a beam #A by DCI (UL grant) using the beam #A. In the example shown in FIG. 4, the UE receives the first indication (indicating a beam #B) in a certain time resource after receiving the DCI. The time resource includes a transmission period of the PUSCH. In this case, the UE drops the transmission of the PUSCH.

### <<Embodiment 1b'>>

When a beam (first beam) based on the beam indication information included in the DCI already received is different from a beam (second beam) indicated by the first indication received after the reception of the beam indication information, the UE may determine to apply the first beam to the transmission/reception of a DL channel/UL channel scheduled by the DCI.

In other words, the UE may ignore the first indication received after the reception of the beam indication information.

When the beam (first beam) based on beam indication information included in the DCI already received is different from the beam (second beam) indicated by the first indication received after reception of the beam indication information, the UE may determine to apply the second beam to transmission/reception of a DL channel/UL channel scheduled by the DCI.

In other words, the UE may change/update the beam based on the beam indication information to the beam based on the first indication received after the reception of the beam indication information.

When the beam (first beam) indicated by the first indication already received is different from the beam (second beam) based on the beam indication information included in the DCI received after the reception of the first indication, the UE may determine not to transmit/receive the DL channel/UL channel scheduled by the DCI.

When the beam (first beam) indicated by the first indication already received is different from the beam (second beam) based on the beam indication information included in the DCI received after the reception of the first indication, the UE may determine to apply the first beam to the transmission/reception of the DL channel/UL channel scheduled by the DCI.

In other words, the UE may ignore the beam indication information received after the reception of the first indication.

When the beam (first beam) indicated by the first indication already received is different from the beam (second beam) based on the beam indication information included in the DCI received after the reception of the first indication, the UE may determine to apply the second beam to the transmission/reception of the DL channel/UL channel scheduled by the DCI.

In other words, the UE may change/update the beam based on the first indication to the beam based on the beam indication information received after the reception of the first indication.

Note that Embodiment 1b' may be applied in a case that the applied beam indicated when the DL channel/UL channel is scheduled and the beam based on the first indication satisfy a specific relationship/condition.

The specific relationship/condition may be a case that the applied beam indicated when the DL channel/UL channel is scheduled and the beam based on the first indication are included in the combinations of beams configured/defined in advance.

The specific relationship/condition may be a case that quality related to the beam based on the first indication is equal to or higher (or higher)/equal to or lower (or lower) than a specific threshold value.

When the specific relationship/condition is not satisfied, the UE may stop/drop the transmission/reception of the scheduled DL channel/UL channel.

According to Embodiment 1b/1b', it is possible to appropriately decide a beam to be applied to a DL/UL channel to be scheduled.

### <<Embodiment 1c>>

When the UE does not receive the first configuration/indication/notification, the UE may determine a beam to be applied to the DL channel/UL channel, based on the beam indication information included in the DCI for scheduling the DL channel/UL channel.

For example, when the UE performs an operation corresponding to at least one described in the above-described Embodiment 1a and does not receive the first configuration/indication/notification, the UE may determine a beam to be applied to the DL channel/UL channel, based on the beam indication information included in the DCI for scheduling the DL channel/UL channel.

According to Embodiment 1c, even when the first configuration/indication/notification is not received, it is possible to appropriately determine a beam to be applied to the DL channel/UL channel.

### <<Embodiment 1d>>

The PDSCH in the first embodiment may be, for example, a PDSCH transmitted in a periodic resource.

The PDSCH transmitted in the periodic resource may be, for example, at least one of a semi-persistent scheduling PDSCH (SPS PDSCH) and repetition of a PDSCH.

The PUSCH in the first embodiment may be, for example, a PUSCH transmitted in a periodic resource.

The PUSCH transmitted in the periodic resource may be, for example, at least one of a configured grant (CG) PUSCH and repetition of a PUSCH.

The CG PUSCH may include a PUSCH based only on a higher layer (RRC) parameter and a PUSCH based on a higher layer (RRC) parameter and a trigger by DCI.

When part of the periodic resource related to the PDSCH/PUSCH is included in the time resource corresponding to the first indication, the UE may apply Embodiment 1b (or 1b') to the part of the resource.

According to Embodiment 1d, it is possible to appropriately determine a beam to be applied to a channel transmitted and/or received using a periodic resource.

### <<Embodiment 1e>>

The first configuration/indication/notification may be in the same format as a signal for a specific use.

For example, the first indication may use the same signal/DCI format as that of an indication to cancel UL transmission with a lower priority (UL cancellation indication).

For example, the UE may apply above-described Embodiment 1b (or 1b') regardless of the priority of the UL channel.

Whether the indication provided by notification to the UE is the first indication or the indication to cancel the UL transmission with a lower priority may be determined/distinguished based on a specific method.

The specific method may be, for example, a method based on a specific configuration (RRC configuration). For example, the UE may determine whether the indication to be provided by notification to the UE is the first indication or the indication to cancel the UL transmission with a lower priority, based on a specific configuration (for example, a configuration related to a PDCCH monitoring occasion/PDCCH candidate/CORESET/search space/RNTI).

The specific method may be, for example, a method based on a specific field included in the DCI. For example, the UE may determine whether the DCI is the first indication or the indication to cancel the UL transmission with a lower priority, based on a specific field included in the DCI provided by notification (a field indicating whether the DCI is the first indication or the indication to cancel the UL transmission with a lower priority). The specific field may be defined by a specific number of bits (for example, 1 bit).

According to Embodiment 1e, the implementation of the UE can be simplified by using the same format as that of the signal for the specific use for the first configuration/indication/notification.

### <<Embodiment 1f>>

The first configuration/indication/notification may be in the same format as a signal for a specific use.

For example, the first indication may use the same signal/DCI format as that of an indication (DL preemption indication) for providing, by notification, a UL channel that has not been transmitted.

Whether the indication provided by the notification to the UE is the first indication or the indication providing notification of the UL channel that has not been transmitted may be determined/distinguished based on a specific method.

The specific method may be, for example, a method based on a specific configuration (RRC configuration). For example, the UE may determine whether the indication provided by notification to the UE is the first indication or the indication for providing by notification the UL channel that has not been transmitted, based on a specific configuration (for example, a configuration related to a PDCCH monitoring occasion/PDCCH candidate/CORESET/search space/RNTI).

The specific method may be, for example, a method based on a specific field included in the DCI. For example, the UE may determine whether the DCI is the first indication or the indication for providing by notification the UL channel that has not been transmitted, based on a specific field included in the DCI provided by notification (a field indicating whether the DCI is the first indication or the indication for providing by notification the UL channel that has not been transmitted). The specific field may be defined by a specific number of bits (for example, 1 bit).

According to Embodiment 1f, the implementation of the UE can be simplified by using the same format as that of the signal for the specific use for the first configuration/indication/notification.

### <<Embodiment 1g>>

The first configuration/indication/notification may use the same format between a signal for the DL channel and a signal for the UL channel.

Whether the indication provided by notification to the UE is an indication for the DL channel or an indication for the UL channel may be determined/distinguished based on a specific method.

The specific method may be, for example, a method based on a specific configuration (RRC configuration). For example, the UE may determine whether the indication provided by notification to the UE is the indication for the DL channel or the indication for the UL channel, based on a specific configuration (for example, a configuration related to a PDCCH monitoring occasion/PDCCH candidate/CORESET/search space/RNTI).

The specific method may be, for example, a method based on a specific field included in the DCI. For example, the UE may determine whether the DCI is an indication for the DL channel or an indication for the UL channel, based on a specific field included in the DCI provided by notification (a field indicating whether the DCI is an indication for the DL channel or an indication for the UL channel). The specific field may be defined by a specific number of bits (for example, 1 bit).

According to Embodiment 1g, the first configuration/indication/notification is common for DL and UL, and thus implementation of the UE can be simplified.

### <<Embodiment 1h>>

The first configuration/indication/notification may be defined as a signal using a specific sequence (specific sequence signal).

The UE may make determination (for example, execution/cancellation/drop/change of transmission and/or reception of a DL/UL channel) related to the first configuration/indication/notification, based on the sequence used for the first configuration/indication/notification.

According to Embodiment 1h, by configuring the first configuration/indication/notification to be identifiable using a sequence, it is possible to appropriately perform notification to UEs in the entire cell.

### <<Embodiment 1i>>

The first configuration/indication/notification may be interpreted as a configuration/indication/notification indicating whether or not a DL/UL channel scheduled can be transmitted and/or received in a certain time resource.

For example, the UE may determine whether or not a DL/UL channel to be scheduled (or already scheduled) can be transmitted and/or received in a corresponding time resource, based on the first configuration/indication/notification.

### <Second Embodiment>

A second embodiment relates to a configuration/indication/notification related to a beam for a certain resource.

Information on a beam applied to a DL/UL channel by the UE may be transmitted for a plurality of UEs included in a cell (for the entire cell).

The UE may receive the information related to the beam to be applied to the DL/UL channel by using a signal common to PLMNs (common to a plurality of operators). The UE may determine the beam for the certain resource, based on a configuration/indication/notification related to a beam for another UE.

### <<Embodiment 2a>>

In a cell x, at least one of DCI (for example, DL assignment) for scheduling a DL channel (for example, PDSCH) and DCI (for example, UL grant) for scheduling a UL channel (for example, PUSCH) may be configured as DCI (for example, 2-stage DCI) that is transmitted separately in a plurality of (for example, two) stages.

Note that, in the present disclosure, the 2-stage DCI is described as a main example, but the number of stages is not limited thereto, and may be a number greater than two.

The first stage DCI (which may be referred to as a first DCI) may be transmitted using a resource common to the PLMNs/common to UEs. In other words, the first DCI may be DCI common to the PLMNs (common to a plurality of operators).

The first DCI may include information/field of a time domain resource and information/field related to a beam.

The first DCI may be DCI that can be received not only by the UE to be scheduled but also by a plurality of UEs (for example, all UEs) in the cell.

CRC of the first DCI may be scrambled with an RNTI common to the PLMNs.

The first DCI may be transmitted periodically. At least one of transmission periodicity of the first DCI, a length of a period in which the first DCI is periodically transmitted, transmission start timing of the first DCI, and the number of times the first DCI is transmitted may be configured/indicated/provided by notification to the UE by using higher layer signaling (for example, RRC/MAC CE)/another DCI.

The UE may receive the first DCI and receive corresponding second stage DCI (which may be referred to as the second DCI), based on the first DCI (may attempt to receive/decode the second DCI).

The first DCI may include information/field related to the PLMN.

The information/field related to the PLMN may indicate/include one or more PLMNs.

For example, the information/field related to the PLMN may be indicated in a bitmap format. The UE may receive correspondence relationship indicating to which PLMN a corresponding bit (position) corresponds in advance. The UE may determine the PLMN indicated by the information/field, based on the bitmap.

For example, the UE may determine reception/decoding of the corresponding second DCI, based on the information/parameters related to the PLMN.

For example, when the information/field related to the PLMN matches the PLMN (PLMN #A) to which the UE itself is connected (or the information/field indicates that the PLMN to which the UE itself is connected is included therein), the UE may receive/decode the corresponding second DCI (may attempt to receive/decode the second DCI).

For example, when the information/field related to the PLMN does not match the PLMN (PLMN #A) to which the UE itself is connected (or the information/field indicates that the PLMN to which the UE itself is connected is not included therein), the UE may not receive/decode the corresponding second DCI (may not attempt to receive/decode the second DCI).

The first DCI may include information/field related to a destination. The destination may be, for example, information for indicating/identifying the UE.

For example, when the information/field related to the destination matches the UE itself, the UE may receive/decode the corresponding second DCI (may attempt to receive/decode the second DCI).

For example, when the information/field related to the destination does not match the UE itself, the UE may not receive/decode the corresponding second DCI (may not attempt to receive/decode the second DCI).

A corresponding second DCI resource may be associated with the resource for the first DCI.

The UE may be notified of the resource for the second DCI by using the first DCI.

The UE may perform blind decoding on a resource set for the second DCI to detect/receive the second DCI.

The UE may assume/determine that the first DCI and the corresponding second DCI are transmitted using the same beam (in a QCL relationship).

The second DCI may be transmitted using a UE-dedicated resource.

The second DCI may include specific scheduling information. The specific scheduling information may not be included in the first DCI.

CRC of the second DCI may be scrambled using a UE-dedicated RNTI (for example, a C (cell) - RNTI).

Capability of PDCCH monitoring related to the first DCI and capability of PDCCH monitoring related to the second DCI may be separately defined/configured.

For example, at least one of the constraint on capability for the blind detection and the constraint on a DCI size may be defined/configured for only the first DCI, only the second DCI, or the first DCI and the second DCI.

The first DCI may be transmitted by beam sweeping. With this configuration, it is possible to notify a plurality of UEs (for example, all UEs) within the range of the cell.

The first DCI may be transmitted using a wide beam. With this configuration, it is possible to notify a plurality of UEs (for example, all UEs) within the range of the cell.

The first DCI may be transmitted by a signal using a sequence (sequence signal). With this configuration, the UE can receive the first DCI by using any beam.

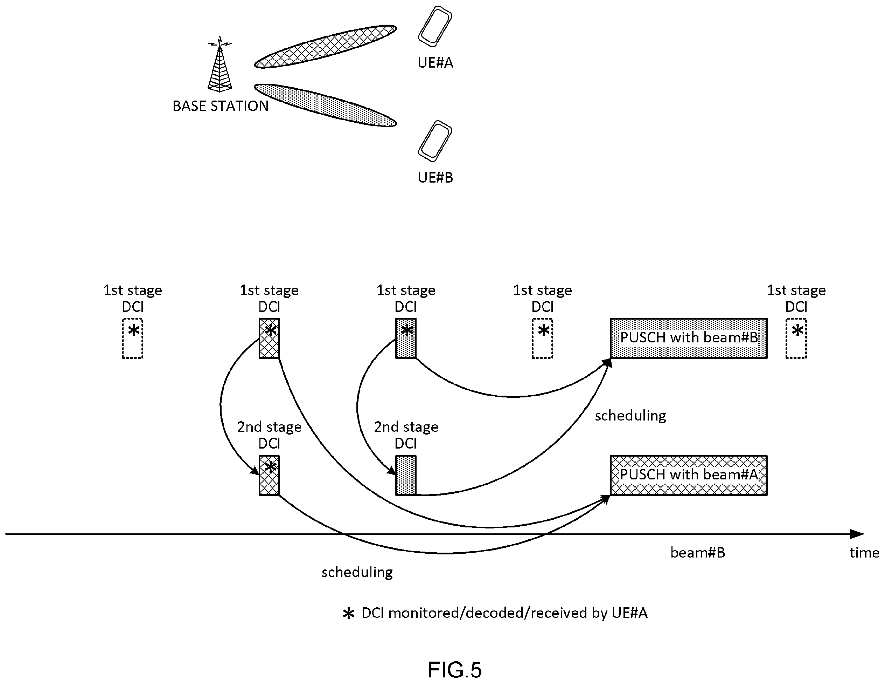

FIG. 5 is a diagram to show an example of a beam indication according to Embodiment 2a. In the example shown in FIG. 5, UE #A is scheduled with a PUSCH to which beam #A is applied, based on the first stage DCI and the second stage DCI. In the example shown in FIG. 5, UE #B is scheduled with a PUSCH to which beam #B is applied, based on the first stage DCI and the second stage DCI.

In the example shown in FIG. 5, UE #A and UE #B monitor/decode/receive a common/identical first DCI. In FIG. 5, in particular, the first DCI monitored/decoded/received by UE #A is illustrated by "*".

Note that, in the example shown in FIG. 5, the first DCI and the second DCI for UEs #A and #B are received in the same time resource, but this is merely an example. The second DCI may be received after the first DCI is received. In the present disclosure, the first DCI and the corresponding second DCI may be allowed to be received/transmitted in the same time domain (for example, symbol).

The UE may not assume that the second DCI is received earlier than reception of the first DCI.

The second DCI received by UE #A and the second DCI received by UE #B may be allocated to the same frequency resource or may be allocated to different frequency resources.

Note that, in the example shown in FIG. 5, beam #A applied to the PUSCH scheduled for UE #A and beam #B applied to the PUSCH scheduled for UE #B are different from each other. In such a case, the UE has an issue of whether to transmit the PUSCH.

In Embodiment 2b (and Embodiment 2b'), a method of applying/deciding a beam in such a case will be described below.

### <<Embodiment 2b>>

The UE may determine/decide information (which may be referred to as beam indication information) related to a beam to be applied to a DL channel (for example, PDSCH)/UL channel (for example, PUSCH) scheduled by at least one of the first DCI/second DCI (for the UE itself), by using the first DCI/second DCI.

In other words, beam indication information to be applied to a DL channel (for example, PDSCH)/UL channel (for example, PUSCH) scheduled by the first DCI/second DCI (for the UE itself) may be included in the first DCI/second DCI (for the UE itself).

The beam indication information may be UE-dedicated beam indication information.

The UE may determine/decide a beam to be applied to a scheduled channel/signal, based on at least one of reception timing of the beam indication information included in the first DCI/second DCI for the UE itself and reception timing of the beam indication information included in the first DCI for another UE.

When the beam applied to the DL channel/UL channel based on the beam indication information included in the already received first DCI/second DCI (for the UE itself) is different from the beam applied to the DL channel/UL channel of another UE that is present in the same time resource as the DL channel/UL channel, the UE may determine not to transmit/receive the scheduled DL channel/UL channel in the indicated resource (for example, cancel/drop transmission/reception of the DL channel/UL channel).

In this case, the UE may determine to transmit/receive the DL channel/UL channel in another time resource.

Such another time resource may be a next time resource corresponding to the beam indication information.

For example, when the UE receives the beam indication information for another UE after the reception of scheduling information addressed to the UE itself (corresponding to the UE itself), the UE may determine not to transmit/receive the scheduled DL channel/UL channel in the indicated resource (for example, cancel/drop transmission/reception of the DL channel/UL channel).

For example, when the UE receives the beam indication information for another UE temporally before reception of the scheduling information addressed to the UE itself (corresponding to the UE itself), the UE may determine to transmit/receive a scheduled DL channel/UL channel in an indicated resource.

When the UE does not receive the scheduled DL channel, the UE may transmit a negative acknowledgment (NACK) to the NW or may not generate HARQ-ACK information/bit (operation 2b).

The UE may determine the application of the operation 2b, based on a period between the HARQ feedback for the DL channel and the reception of the first DCI/second DCI.

For example, the UE may apply the operation 2b when a period between HARQ feedback for the DL channel and (transmission/reception of) the first DCI/second DCI is equal to or longer than (or longer than) a specific time period T.

For example, the UE may not apply operation 2b when the period between the HARQ feedback for the DL channel and (transmission/reception of) the first DCI/second DCI is equal to or shorter than (or shorter than) the specific time period T.

The T may be defined in a specification in advance, may be configured/indicated/provided by notification to the UE by using higher layer signaling (RRC/MAC CE)/DCI, may be decided based on the UE capability information, or may be decided by using a combination of these.

The UE may determine to stop/drop the transmission of the UL channel, based on a period between the transmission of the UL channel and (the transmission/reception of) the first DCI/second DCI.

For example, the UE may determine to stop/drop the transmission of the UL channel when the period between the transmission of the UL channel and (the transmission/reception of) the first DCI/second DCI is equal to or longer than (or longer than) a specific time period T'.

For example, the UE may determine not to stop/drop the transmission of the UL channel when the period between the transmission of the UL channel and (the transmission/reception of) the first DCI/second DCI is equal to or shorter than (or shorter than) the specific time period T'.

The T' may be defined in a specification in advance, may be configured/indicated/provided by notification to the UE by using higher layer signaling (RRC/MAC CE)/DCI, may be decided based on the UE capability information, or may be decided by using a combination of these.

The UE may assume/determine that the above-described T and T' are the same, or may assume/determine that these are determined/defined separately.

Note that, when some resources of a DL channel/UL channel scheduled by DCI overlap with a resource of a DL channel/UL channel for another UE, the present embodiment may be applied to the some resources, or the present embodiment may be applied to all resources of the DL channel/UL channel including the some resources.

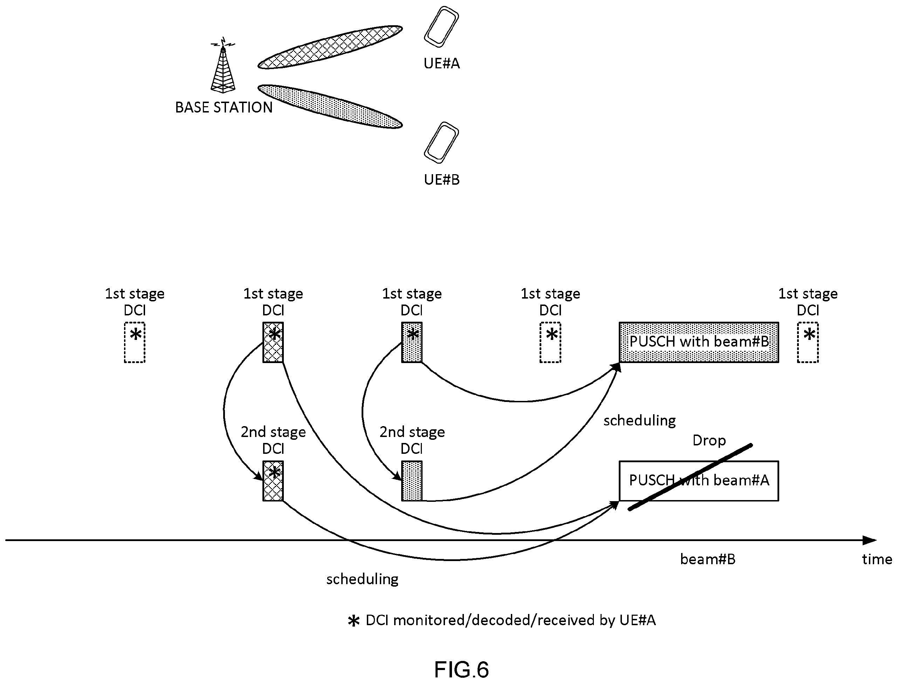

FIG. 6 is a diagram to show an example of a beam indication according to Embodiment 2b. In the example shown in FIG. 6, UE #A is scheduled with a PUSCH to which beam #A is applied, based on the first stage DCI and the second stage DCI.

In the example shown in FIG. 6, UE #B is scheduled with a PUSCH to which beam #B is applied, based on the first stage DCI and the second stage DCI. The PUSCH for UE #A and the PUSCH for UE #B are scheduled to overlap in time.

In the example shown in FIG. 6, UE #A and UE #B monitor/decode/receive a common/identical first DCI. In FIG. 6, in particular, the first DCI monitored/decoded/received by UE #A is illustrated.

In the example shown in FIG. 6, UE #A receives the first DCI including the beam indication information for UE #A, and then receives the first DCI including the beam indication information for UE #B. Therefore, UE #A stops/drops the transmission of the PUSCH to which beam #A is applied.

Note that Embodiment 2b may be applied to a case where the priority of DL channel reception/UL channel transmission of another UE is higher than the priority of DL channel reception/UL channel transmission of the UE itself.

### <<Embodiment 2b'>>

When a beam (first beam) to be applied to a DL channel/UL channel based on beam indication information included in already received first DCI/second DCI (for the UE itself) is different from a beam (second beam) to be applied to a DL channel/UL channel of another UE that is present in the same time resource as the DL channel/UL channel for the first beam, the UE may determine to apply the first beam to transmission/reception of the scheduled DL channel/UL channel.

In other words, the UE may ignore beam indication information for another UE received after the reception of the beam indication information for the UE itself.

When the beam (first beam) to be applied to the DL channel/UL channel based on the beam indication information included in the already received first DCI/second DCI (for the UE itself) is different from the beam (second beam) to be applied to the DL channel/UL channel of another UE that is present in the same time resource as the DL channel/UL channel for the first beam, the UE may determine to apply the second beam to transmission/reception of the scheduled DL channel/UL channel.

In other words, the UE may change/update from the beam based on the beam indication information for the UE to the beam based on the beam indication information for another UE that is received after the reception of the beam indication information for the UE.

When the beam (first beam) to be applied to the DL channel/UL channel based on already received beam indication information for another UE is different from the beam (second beam) to be applied to the DL channel/UL channel that is scheduled for the UE itself and that is present in the same time resource as the DL channel/UL channel for the first beam, the UE may determine not to transmit/receive the scheduled DL channel/UL channel.

When the beam (first beam) to be applied to the DL channel/UL channel based on already received beam indication information for another UE is different from the beam (second beam) to be applied to the DL channel/UL channel that is scheduled for the UE itself and that is present in the same time resource as the DL channel/UL channel for the first beam, the UE may determine to apply the first beam to transmission/reception of the scheduled DL channel/UL channel.

In other words, the UE may ignore the beam indication information received after the reception of the beam indication information for another UE.

When the beam (first beam) to be applied to the DL channel/UL channel based on already received beam indication information for another UE is different from the beam (second beam) to be applied to the DL channel/UL channel that is scheduled for the UE itself and that is present in the same time resource as the DL channel/UL channel for the first beam, the UE may determine to apply the second beam to transmission/reception of the scheduled DL channel/UL channel.

In other words, the UE may change/update the beam based on the beam indication information for another UE to the beam based on the beam indication information (for the UE itself) received after the reception of the beam indication information for the other UE.

Note that Embodiment 2b' may be applied when an applied beam indicated when a DL channel/UL channel for the UE itself is scheduled and a beam based on beam indication information for another UE satisfy a specific relationship/condition.

The specific relationship/condition may be a case where the applied beam indicated when the DL channel/UL channel for the UE itself is scheduled and the beam based on the beam indication information for the other UE are included in the combinations of beams configured/defined in advance.

The specific relationship/condition may be a case that the quality related to the beam based on the beam indication information for another UE is equal to or higher (or higher)/equal to or lower (or lower) than a specific threshold value.

When the specific relationship/condition is not satisfied, the UE may stop/drop the transmission/reception of the scheduled DL channel/UL channel.

According to Embodiment 2b/2b', it is possible to appropriately decide a beam to be applied to a DL/UL channel to be scheduled.

### <<Embodiment 2c>>

When the UE does not receive the beam indication information for another UE, the UE may determine a beam to be applied to the DL channel/UL channel, based on the beam indication information included in the first DCI/second DCI.

For example, when the UE performs an operation corresponding to at least one of the operations described in Embodiment 2a and does not receive the beam indication information for another UE, the UE may determine a beam to be applied to the DL channel/UL channel, based on the beam indication information included in the first DCI/second DCI.

According to Embodiment 2c, even when the beam indication information for another UE is not received, it is possible to appropriately determine a beam to be applied to the DL channel/UL channel.

### <<Embodiment 2d>>

The PDSCH in the second embodiment may be, for example, a PDSCH transmitted in a periodic resource.

The PDSCH transmitted in the periodic resource may be, for example, at least one of an SPS PDSCH and the repetition of a PDSCH.

The PUSCH in the second embodiment may be, for example, a PUSCH transmitted in a periodic resource.

The PUSCH transmitted in the periodic resource may be, for example, at least one of a CG PUSCH and repetition of a PUSCH.

When a part of the periodic resource related to the PDSCH/PUSCH on which the UE is scheduled is included in the time resource of the PDSCH/PUSCH on which another UE is scheduled, the UE may apply Embodiment 2b (or 2b') to the part of the resource.

According to Embodiment 2d, it is possible to appropriately determine a beam to be applied to a channel transmitted and/or received using a periodic resource.

### <<Variations of Second Embodiment>>

The 2-step DCI (the configuration of the 2-step DCI) in the cell x may be used for purposes other than the notification of the beam indication information.

For example, the UE may be indicated/notified which signal/channel resource is used for which PLMN using the 2-stage DCI (first DCI/second DCI).

For example, the UE may be indicated/notified of which PLMN the multicast/broadcast communication is for the associated UE (under the control of the PLMN), by using the 2-stage DCI (first DCI/second DCI).

For example, the UE may receive information related to cancellation of the scheduled resource by using the 2-stage DCI (first DCI/second DCI). For example, when the UE detects that a resource already scheduled for the UE itself overlaps with a resource scheduled for another PLMN, the UE may assume/determine that the already scheduled resource has been canceled by using the 2-stage DCI.

### <Variations of First/Second Embodiments>

The above-described embodiments may be applied/performed at a specific time/period.

The specific time/period may be, for example, time/period configured/notified in advance, or may be decided based on a timer.

The UE may assume/determine to apply a beam based on the beam indication information for the scheduled DL channel/UL channel, except for the specific time/period.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

The specific condition may indicate at least one of the following:
- operation is performed in FR3. FR3 may be the entire or a part of the range 7125 to 24250 MHz.
- operation is performed in FRx. FRx may be the entire or a part of a range higher than 71 GHz.

At least one of the above-described embodiments may be applied only to a UE that has reported a specific UE capability or that supports the specific UE capability.

The specific UE capability may indicate at least one of the following:
- supporting of specific processing/operation/control/information for at least one of the above embodiments.
- supporting of connection to cell x.
- supporting (analog) beam forming in cell x.
- supporting scheduling by 2-stage DCI.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

The specific UE capability may be defined as a mandatory function without UE capability signaling or may be defined as a mandatory function with UE capability signaling. The specific UE capability may be defined as an optional (selectable) function without UE capability signaling or may be defined as an optional function with UE capability signaling.

At least one of the above-described embodiments may be applied when the UE is configured/activated/triggered with specific information related to the above-described embodiment (or performance of the operation of the above-described embodiment) by higher layer signaling/physical layer signaling. The specific information may indicate at least one of the following:
- information indicating enabling/disabling of the operation of any of the above-described embodiments.
- RRC parameter for a specific release (for example, Rel. 18/19/20/21). The RRC parameter may have a name obtained by attaching "r18"/"r19"/"r20"/"r21" to the name of an existing RRC parameter.

When the UE does not support at least one of the specific UE capabilities above or is not configured with the specific information, operation of Rel. 15/16/17/18/19 may be applied, for example.

### (Supplementary Notes)

Regarding one embodiment of the present disclosure, the following supplementary notes of the invention will be given.

### {Supplementary Note 1}

A terminal includes: a receiving section that receives at least one of a first indication used for at least a beam indication and a second indication used for a beam indication and scheduling of a specific channel, the first indication and the second indication being common to a plurality of operators; and a control section that determines a beam to be applied to the specific channel, based on reception timing of the first indication and reception timing of the second indication.

### {Supplementary Note 2}

The terminal according to supplementary note 1, wherein when the first indication is received after reception of the second indication and a beam based on the first indication and a beam based on the second indication are different from each other, the control section determines not to perform transmission and/or reception of the specific channel.

### {Supplementary Note 3}

The terminal according to supplementary note 1 or 2, wherein when the first indication is not received, the control section applies a beam based on the second indication to the specific channel.

### {Supplementary Note 4}

The terminal according to any one of supplementary notes 1 to 3, wherein the first indication is downlink control information common to the plurality of operators, and the second indication is downlink control information specific to the terminal.

### (Radio Communication System)

Hereinafter, a structure of a radio communication system according to one embodiment of the present disclosure will be described. In this radio communication system, the radio communication methods according to the respective embodiments of the present disclosure described above may each be used alone or may be used in combination for communication.

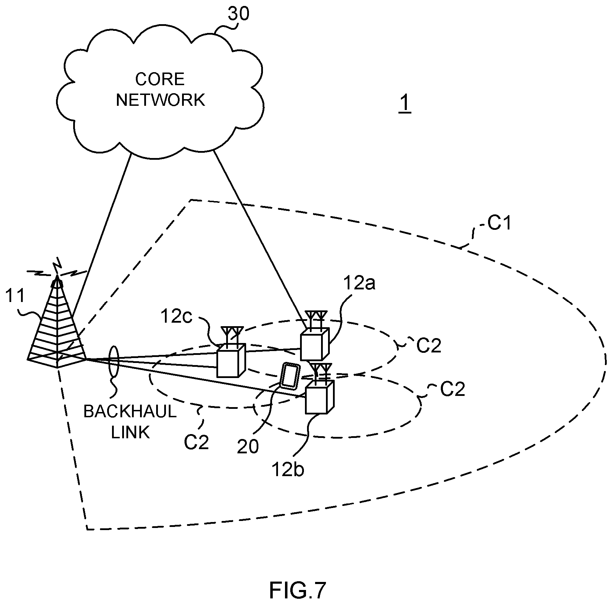

FIG. 7 is a diagram to show an example of a schematic structure of the radio communication system according to one embodiment. A radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

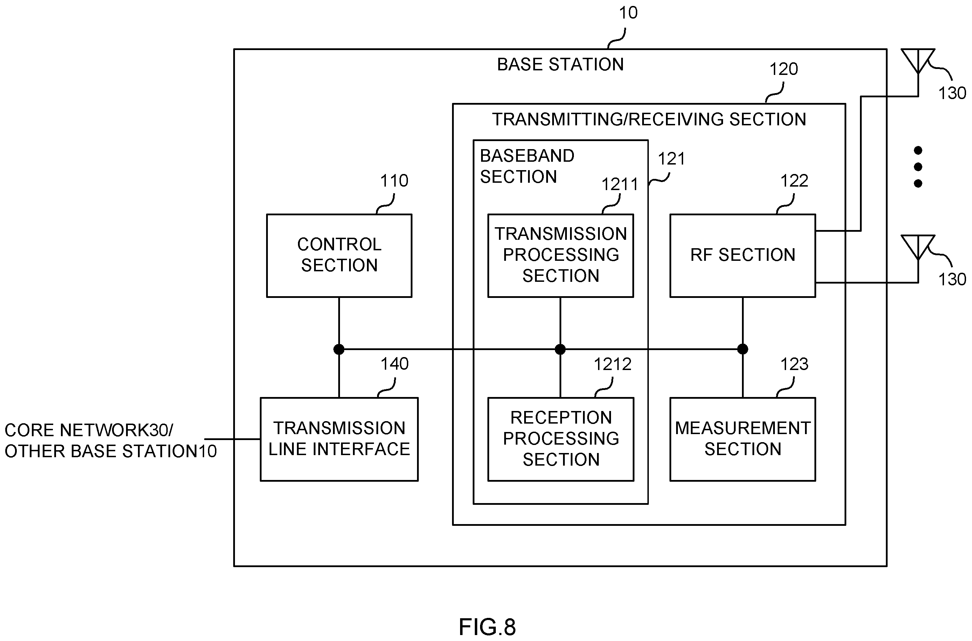

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit at least one of a first indication used for at least a beam indication and a second indication used for a beam indication and scheduling of a specific channel, the first indication and the second indication being common to a plurality of operators. The control section 110 may indicate a beam to be applied to the specific channel by using reception timing of the first indication and reception timing of the second indication (first/second embodiment).

### (User Terminal)

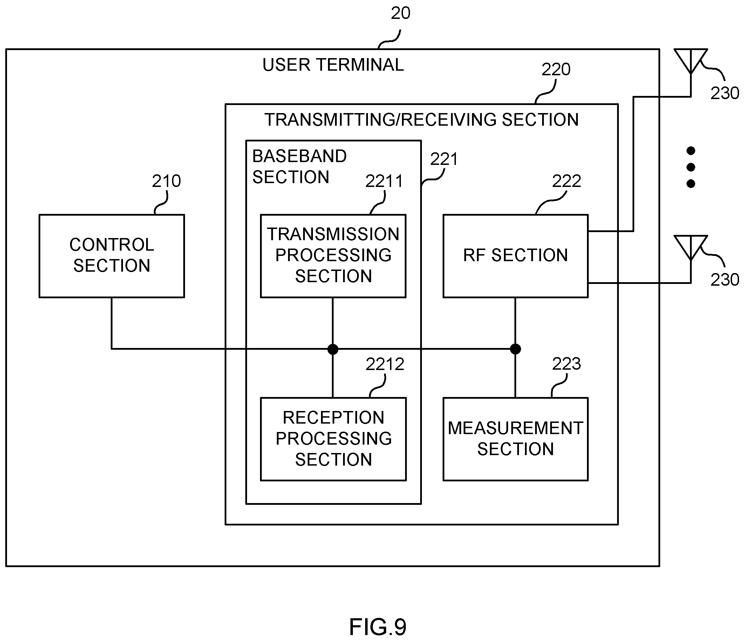

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of a first indication used for at least a beam indication and a second indication used for a beam indication and scheduling of a specific channel, the first indication and the second indication being common to a plurality of operators. The control section 210 may determine a beam to be applied to the specific channel, based on reception timing of the first indication and reception timing of the second indication (first/second embodiment).

When the first indication is received after reception of the second indication and a beam based on the first indication and a beam based on the second indication are different from each other, the control section 210 may determine not to perform transmission and/or reception of the specific channel (first embodiment).

When the first indication is not received, the control section 210 may apply a beam based on the second indication to the specific channel (first embodiment).

The first indication may be downlink control information common to the plurality of operators. The second indication may be downlink control information specific to the terminal (second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

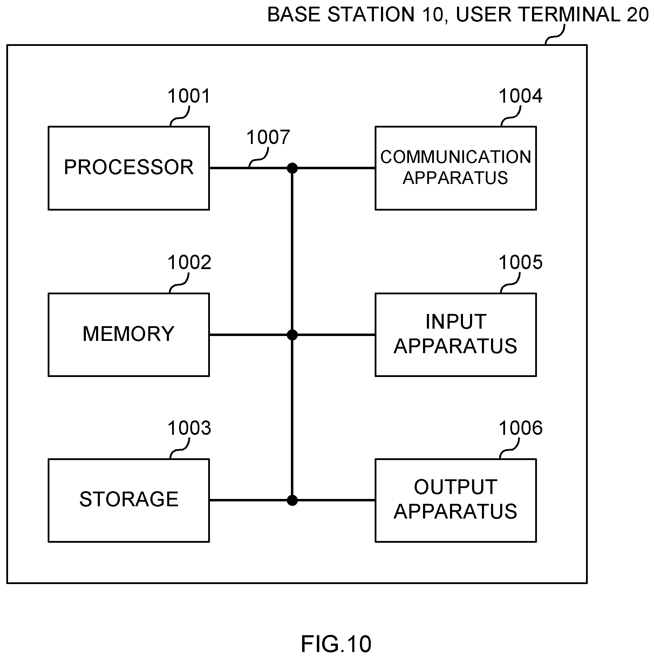

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

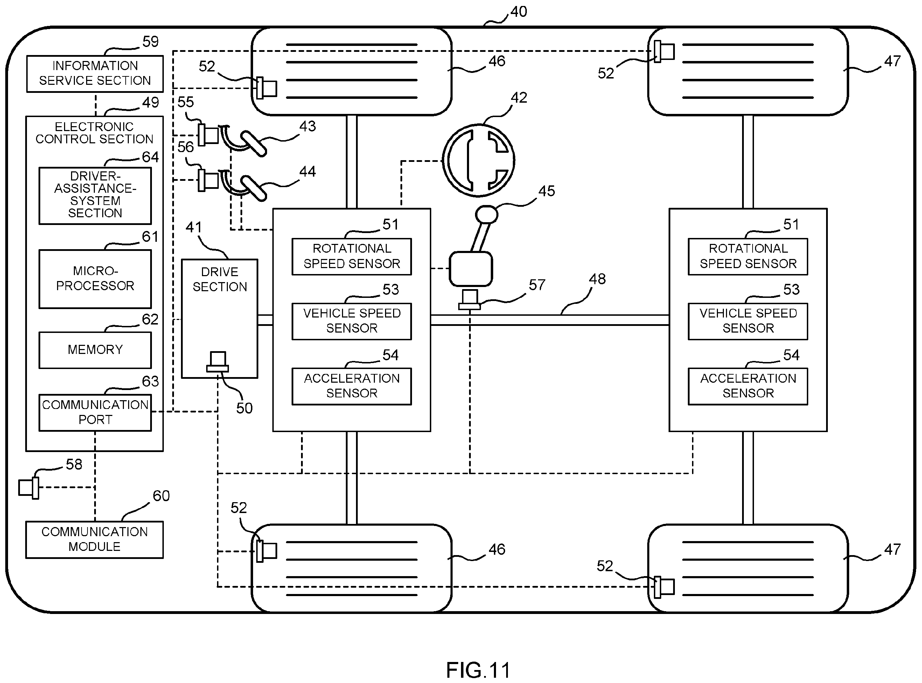

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period/duration, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives at least one of a first indication used for at least a beam indication and a second indication used for a beam indication and scheduling of a specific channel, the first indication and the second indication being common to a plurality of operators; and
a control section that determines a beam to be applied to the specific channel, based on reception timing of the first indication and reception timing of the second indication.

2. The terminal according to claim 1, wherein
when the first indication is received after reception of the second indication and a beam based on the first indication and a beam based on the second indication are different from each other, the control section determines not to perform transmission and/or reception of the specific channel.

3. The terminal according to claim 1, wherein
when the first indication is not received, the control section applies a beam based on the second indication to the specific channel.

4. The terminal according to claim 1, wherein
the first indication is downlink control information common to the plurality of operators, and the second indication is downlink control information specific to the terminal.

5. A radio communication method for a terminal, the radio communication method comprising:
receiving at least one of a first indication used for at least a beam indication and a second indication used for a beam indication and scheduling of a specific channel, the first indication and the second indication being common to a plurality of operators; and
determining a beam to be applied to the specific channel, based on reception timing of the first indication and reception timing of the second indication.

6. A base station comprising:
a transmitting section that transmits at least one of a first indication used for at least a beam indication and a second indication used for a beam indication and scheduling of a specific channel, the first indication and the second indication being common to a plurality of operators; and
a control section that indicates a beam to be applied to the specific channel by using reception timing of the first indication and reception timing of the second indication.
